# EUROPÄISCHE PATENTANMELDUNG

(11) **EP 1 612 505 A1**
(43) Veröffentlichungstag der Anmeldung: **04.01.2006**
(21) Anmeldenummer: 05013189.5
(22) Anmeldetag: 18.06.2005
(51) Int. Cl.: G01B 3/02

(54) **Mess- und Ablänganschlag zum Einstellen der Bearbeitungs- und Ablängmasse bei Profilen, Stab- und Stangenmaterial**

(30) Priorität: 29.06.2004 DE 102004031292
(71) Anmelder: Reiplinger, Roswitha, 54669 Bollendorf (DE)
(72) Erfinder: Reiplinger, Günter, 54669 Bollendorf (DE)
(74) Vertreter: Pürckhauer, Rolf

(57) **Zusammenfassung**

Die Erfindung betrifft einen Meß- und Ablänganschlag (9) zum Einstellen der Bearbeitungs- und Ablängmaße bei Profilen, Stab- und Stangematerial, z.B. für die Herstellung von Fenstern und Türen, mit einem mit einer Meßskala (22) versehenen Lineal (10), das an einer Bearbeitungsmaschine (26) befestigt wird, sowie einem auf dem Lineal (10) verschiebbaren und festklemmbaren Meßschieber (16) mit einem Anschlag (17) für das in die Bearbeitungsmaschine (26) über das Lineal (10) einzuführende oder das aus der Maschine austretende, zu bearbeitende Profil, Stab- und Stangenmaterial.

## Beschreibung

Die Erfindung betrifft einen Meß- und Ablänganschlag zum Einstellen der Bearbeitungs- und Ablängmaße bei Profilen, Stab- und Stangenmaterial, z.B. für die Herstellung von Fenstern und Türen, mit einem mit einer Meßskala versehenen Lineal, das an einer Bearbeitungsmaschine, insbesondere einer Stanzpresse, befestigt wird, sowie einem auf dem Lineal verschiebbaren und festklemmbaren Meßschieber mit einem Anschlag für das in die Bearbeitungsmaschine über das Lineal einzuführende oder das aus der Maschine austretende, zu bearbeitende Profil, Stab- und Stangenmaterial.

Bei der Fenster- und Türenfertigung werden zum Einstellen der einzelnen Abläng- und Bearbeitungsmaße Meß- und Ablänganschläge benötigt, die beispielsweise an Sägen, Stanzen, Fräsen und dergleichen Bearbeitungsmaschinen angebaut werden. Bei den verwendeten Meß- und Ablänganschlägen werden die Meßskalen auf Hohlstäbe oder Flachstäbe fest eingraviert, aufgenietet oder aufgeklebt. Dies hat den Nachteil, daß später der Anfangspunkt der Meßskalen nicht den unterschiedlichen Maßarten, beispielsweise bei der Fensterfertigung dem Flügelfalzmaß, dem Flügelaußenmaß oder dem Rahmenaußenmaß angepaßt werden kann. Die Meß- und Ablänganschläge sind mit Feststellschiebern mit einem Anschlag für das zu bearbeitende Material ausgerüstet, die das Lineal des Meß- und Ablänganschlages fest umschließen müssen, so daß eine Auflage des zu bearbeitenden Werkstücks auf dem Lineal nur an den Anfangs- und Endpunkten möglich ist und außerdem eine größere Stabilität des Lineals erforderlich ist. Bei der handwerklichen Einzelfertigung beispielsweise von Aluminiumfenstern wird meistens bei der Bearbeitung und Ablängung der Treibstangen der Drehkippbeschläge mit einfachen Gliedermaßstäben oder mit einfachen ungenauen Maßstäben mit aufgeklebten Meßskalen mit einer Meßungenauigkeit von 1 - 2 Prozent gearbeitet, so daß ein hohes Ausschußrisiko in Kauf genommen werden muß. Jedes einzelne Maß muß wegen einer Vielzahl der Abzugsmaße für die üblichen durch Zwischenbauteile gekürzten oder geteilten Treibstangen der Drehkippbeschläge errechnet werden, wodurch ein hohes Fehlerrisiko und zusätzlich ein Ausschuß entsteht.

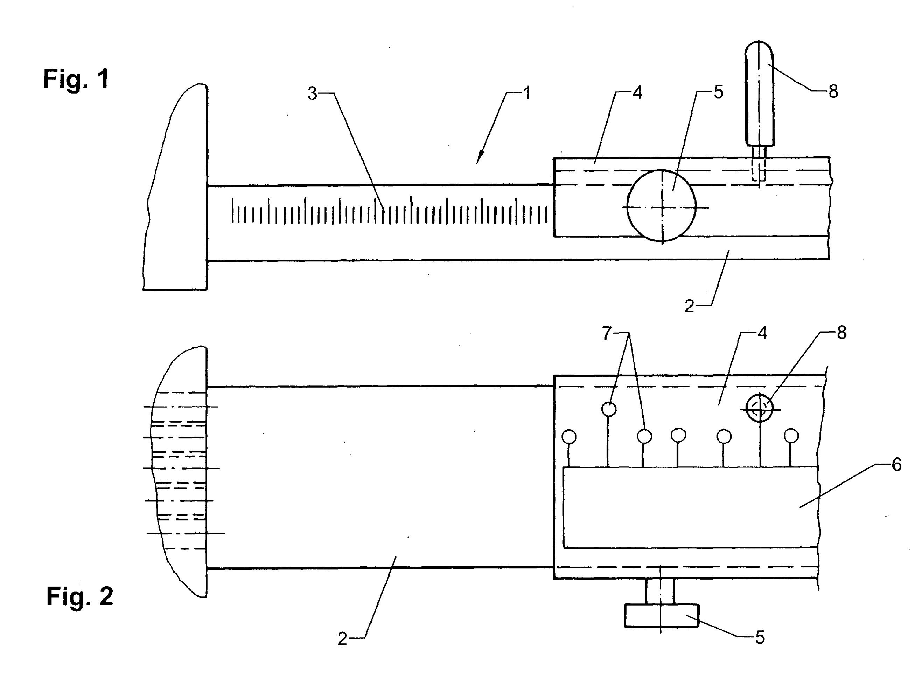

Ein auf dem Markt für die Serienfertigung von Aluminiumfenstern angebotener Meß- und Ablänganschlag 1 für eine Stanzpresse, der in den Figuren 1 und 2 dargestellt ist, besteht aus einem Lineal 2 mit einer seitlich in einem ungünstigen Blickwinkel eingravierten Meßskala 3 im Maßstab 1 : 1. Auf dem Lineal 2 ist ein sehr breiter und schwer zu bedienender Meßschieber 4 verschiebbar geführt, der mit einer Feststellschraube 5 auf dem Lineal 2 festklemmbar ist. In den Meßschieber 4 ist aufwendig eine Abzugstabelle 6 eingraviert. Den jeweiligen Abzugsmaßen sind Bohrungen 7 zugeordnet, durch die ein Anschlagstift 8 gesteckt wird, der an der Unterseite des Meßschiebers 4 als Anschlag für das Stanzgut herausragt. Das Stanzgut muß so weit unter den Meßschieber 4 geschoben werden, bis es den Anschlagstift 8 berührt. Da die Berührungsstelle verdeckt ist, kann es zu Fehlmessungen kommen. Ferner ist die Entnahme des Stanzgutes infolge der Abdeckung durch den Meßschieber schwierig.

Bei der Fertigung von Kunststoffenstern werden zur Ablängung der in Rasterlängen vorgefertigten Drehkippbeschläge Meß- und Ablänganschläge mit festen Doppelmeßskalen im Maßstab 1 : 1 und 1 : 2 kombiniert. Eine spätere Verschiebung der Meßskalen beispielsweise vom Flügelfalz auf das Flügelaußenmaß oder das Rahmenaußenmaß ist nicht möglich. Auch eine Verschiebung der Meßskalen gegeneinander zur Reduzierung der Maßkantenzahl an dem Meßschieber ist nicht möglich. Der Meßschieber selbst muß das Voll-, Hohl- oder Flachlineal voll umschließen, wodurch eine Auflage oder Befestigung des Lineals des Meß- und Ablänganschlags nur an den Endpunkten möglich ist.

An Stanzpressen beispielsweise für Langlochstanzungen für Griffgetriebedurchführungen an Aluminiumfenstern werden keine Meßeinrichtungen eingesetzt, sondern es wird lediglich mit Anrißmarkierungen gearbeitet. Dies führt zu Qualitätseinbußen und Ausschuß.

Der Erfindung liegt die Aufgabe zugrunde, einen einfachen und kostengünstigen Meß- und Ablänganschlag zu entwickeln, der der jeweiligen Maßsituation der unterschiedlichen, zu bearbeitenden Werkstücke angepaßt und der baukastenartig mit zusätzlichen Linealen mit verschiedenen Meßskalen koppelbar ist.

Diese Aufgabe wird erfindungsgemäß gelöst durch einen Meß- und Ablänganschlag mit den Merkmalen des Patentanspruchs 1.

Die Unteransprüche beinhalten vorteilhafte und zweckmäßige Weiterbildungen der Erfindung.

Der erfindungsgemäße Meß- und Ablänganschlag zeichnet sich durch folgende Vorteile aus:

Das Lineal des Meß- und Ablänganschlags kann mit Einfach- und Mehrfachmeßskalen ausgestattet sein, die beliebig, auch nachträglich und relativ zueinander verstellbar sind. Der Linealkörper und der Meßschieber sind gegenüber bekannten Meß- und Ablänganschlägen verkleinert und das Lineal kann über die ganze Länge an beliebigen Punkten an einer Konsole befestigt werden. Der Meß- und Ablänganschlag ist für den Transport leicht zerlegbar, ohne das die Meß- und Einstellgenauigkeit beeinträchtigt wird. Der Meß- und Ablänganschlag ist für einen Handbetrieb und einen motorischen Antrieb geeignet. Die Meßskalen können ohne große Aufwand dem erforderlichen Genauigkeitsgrad angepaßt werden und sind auswechselbar. Der Sichtwinkel auf die Meßskala beziehungsweise die Meßskalen ist gegenüber den bekannten Meß- und Ablänganschlägen verbessert. Der Meßschieber besitzt gegenüber den bekannten Meß- und Ablänganschlägen weniger Meß- und Ablesekanten. Die zu verarbeitenden Werkstücke sind auf dem Lineal gut geführt, können bei einer flexiblen Ausbildung mit der Anschlagkante des Meßschiebers lösbar gekoppelt werden und sind leicht aus dem Meß- und Ablänganschlag entnehmbar. Zur genauen Positionierung der Rahmenprofile bei der Langlochstanzung für den Getriebegriff an Aluminiumfenstern ist der Meß- und Ablänganschlag auf jeden gewünschten Gehrungswinkel einstellbar, wobei die Gehrungsspitze vom Anlagedruck entlastet wird. Schließlich ist der Meß- und Ablänganschlag für die Bearbeitung von Profilen für Fenster mit Links- und Rechtsanschlag geeignet.

Die Erfindung ist nachstehend anhand von Zeichnungsfiguren erläutert, die folgendes darstellen:
- Fig. 3: eine Draufsicht eines an einer Bearbeitungsmaschine angebrachten Meß- und Ablänganschlags,
- Fig. 4: einen Querschnitt des mittig an einer Konsole der Bearbeitungsmaschine angebrachten Lineals des Meß- und Ablänganschlags nach Linie IV-IV der Fig. 3 in vergrößerter Darstellung,
- Fig. 5: einen Querschnitt des seitlich an einer Konsole einer Bearbeitungsmaschine angebrachten Lineals der Meß- und Ablängeinrichtung mit einem an dem Lineal verschiebbar geführten Meßschieber vor dem Meßschieber in vergrößerter Darstellung,
- Fig. 6: einen Querschnitt eines Meß- und Ablänganschlags mit zwei miteinander gekoppelten Linealen,
- Fig. 7: einen vergrößerten Ausschnitt einer Anschlag- und Meßkante eines Meßschiebers mit einer angekoppelten Kunststofftreibstange eines Drehkippbeschlages für Fenster,
- Fig. 8: eine Querschnittsdarstellung eines Lineals mit einer Stützleiste für ein vormontiertes Stangengut,
- Fig. 9: eine Draufsicht von zwei gekoppelten Linealen mit Meßskalen und eines Lineals als Stanzgutführung mit einem Meßschieber und einem Schiebe-Meßstab für Abzugsmaße,
- Fig. 10: einen Querschnitt des Meß- und Ablänganschlags nach Linie X-X der Fig. 9,
- Fig. 11: eine Seitenansicht des Meß- und Ablänganschlags in Pfeilrichtung XI der Fig. 9,
- Fig. 12: die Draufsicht eines motorisch angetriebenen Meß- und Ablänganschlags mit Kontrollskala,
- Fig. 13: eine Unteransicht des Meß- und Ablänganschlags nach Fig. 12,
- Fig. 14: einen Querschnitt des Lineals des Meß- und Ablänganschlags nach den Fig. 12 und 13,
- Fig. 15: einen Längsschnitt eines Spindeleinbausatzes für den motorisch angetriebenen Meß- und Ablänganschlag und
- Fig. 16: die Draufsicht eines Meß- und Ablänganschlagsystems zur Einstellung der Position der Grifflochstanzung an Aluminiumfenstern.

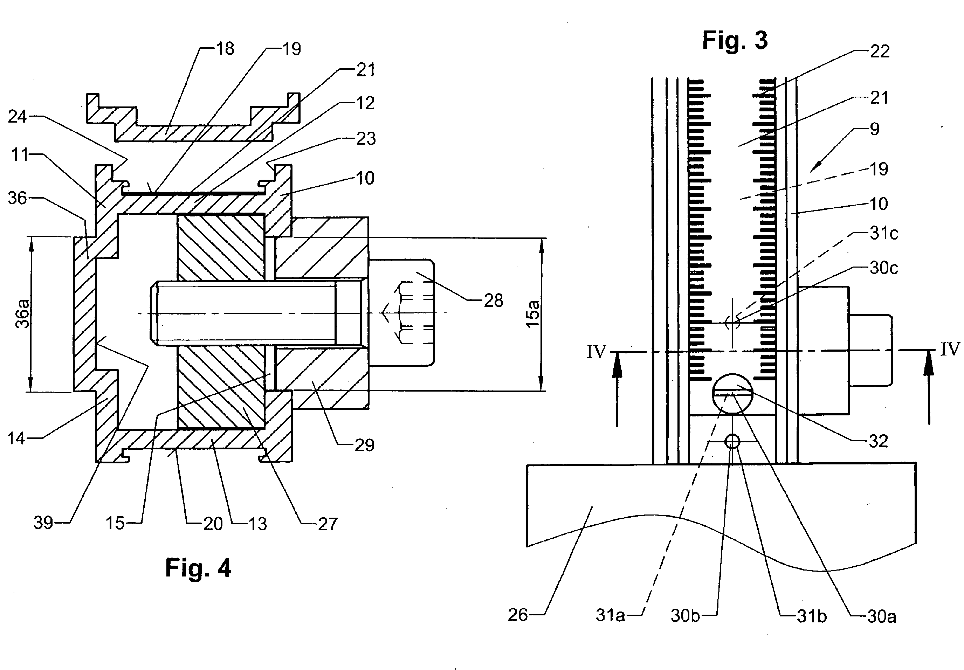

Der Meß- und Ablänganschlag 9 nach den Figuren 3 bis 6 zum Einstellen der Bearbeitungs- und Ablängmaße bei Profilen, Stab- und Stangenmaterial, z.B. für die Herstellung von Fenstern und Türen, ist mit einem Lineal 10 ausgestattet, das als C-Profil 11 mit einem Oberschenkel 12, einem Unterschenkel 13, einem Seitenschenkel 14 und einer diesem gegenüberliegenden, durchgehenden Seitenöffnung 15 ausgebildet ist. Ein Meßschieber 16 mit einer quer zum Lineal 10 gerichteten und mit Abstand über dessen Oberschenkel 12 angeordneten Anschlag- und Meßkante 17 für das zu bearbeitende Werkstück 18 ist mittels eines seitlich an dem Meßschieber 16 angeordneten Kulissensteins 25 in der Seitenöffnung 15 des Lineals 10 seitlich und in Längsrichtung desselben verschiebbar geführt und an dem Lineal 10 festklemmbar.

In dem Oberschenkel 12 und dem Unterschenkel 13 des Lineals 10 ist je eine Aufnahmenut 19, 20 für ein flexibles Maßband 21 mit einer Meßskala 22 ausgebildet.

Das Lineal 10 ist mit gegenüberliegenden, über der Aufnahmenut 19 im Oberschenkel 12 für das Maßband 21 angeordneten Längsführungen 23, 24 für das jeweils zu bearbeitende Werkstück 18 ausgestattet.

Gemäß den Figuren 3 und 4 dient zur Befestigung des Lineals 10 an einer Bearbeitungsmaschine 26, z. B. einer Stanzpresse, eine an der Bearbeitungsmaschine angebrachte Konsole 27, die in das C-Profil 11 des Lineals 10 formschlüssig eingreift und auf der das Lineal 10 mit einer Klemmschraube 28 über ein in die Seitenöffnung 15 des Lineals eingreifendes Distanzstück 29 festklemmbar ist, so daß der Nullpunkt des Lineals 10 stufenlos einstellbar ist.

Die Aufnahmenut 20 für ein Maßband 21 in dem Unterschenkel 13 des Lineals 10 ermöglicht es, das Lineal um 180° um seine Längsachse zu drehen, wenn die Führungen 23, 24 für das zu bearbeitende Werkstück 18 nicht benötigt werden, um auf diese Weise eine bessere Sicht auf die Meßskala 22 des Meßbandes 21 zu haben.

Zusätzlich zu der Justierbarkeit des Lineals 10 kann das Maßband 21 an verschiedenen Stellen 30a, 30b, 30c in den Aufnahmenuten 19, 20 des Lineals 10 befestigt werden. Dies ermöglicht es, die Meßskala 22 des Maßbandes 21 entsprechend der Abmessung des jeweils zu bearbeitenden Werkstücks 18, insbesondere bei der Ablängung von Beschlägen bei der Herstellung von Fenstern, auf das Flügelmaß, das Flügelaußenmaß oder das Blendrahmenmaß einzustellen.

Das Lineal 10 weist mehrere Gewindebohrungen 31a, 31b, 31c zum Einschrauben einer Befestigungsschraube 32 für ein Maßband 21 auf.

Zur lösbaren Befestigung des Meßschiebers 16 an dem Lineal 10 dient eine Klemmschraube 33, die eine Gewindebohrung 34 in dem Meßschieber 16 von außen durchsetzt und zum Festklemmen des Meßschiebers 16 an dem Lineal 10 mit einer in dem C-Profil 11 desselben verdrehsicher und verschiebbar geführten Kontermutter 35 zusammenwirkt, wobei der Meßschieber 16 mittels der Klemmschraube 33 und der Kontermutter 35 mit einer Hand positionierbar und festklemmbar ist.

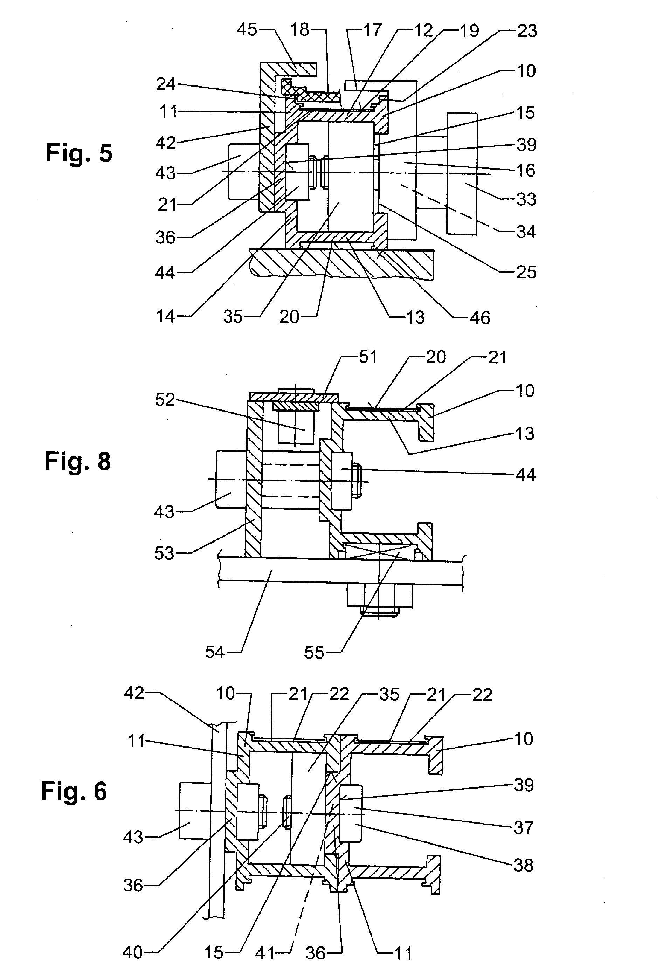

An dem Seitenschenkel 14 des Lineals 10 ist eine Anschlußleiste 36 angeordnet, deren Breite 36a derjenigen 15a der gegenüberliegenden Seitenöffnung 15 des Lineals 10 entspricht. Durch diese geometrische Ausbildung können zwei Lineale 10, die beispielsweise mit einem Maßband 21 mit einer Meßskala 22 im Maßstab 1:1 und einem Maßband 21 mit einer Meßskala 22 im Maßstab 1:2 bestückt sind, beispielsweise zum Ablängen von Drehkippbeschlägen bei der Herstellung von Kunststoffenstern miteinander gekoppelt werden, wobei beim Koppeln der Lineale 10 die Anschlußleiste 36 des einen Lineals 10 in die Seitenöffnung 15 des anderen Lineals 10 formschlüssig eingreift (Fig. 6). Zum gegenseitigen Verspannen der beiden miteinander gekoppelten Lineale 10 dient eine Spannschraube 37, deren Kopf 38 in eine von der Anschlußleiste 36 des ersten Lineals 10 gebildete Innennut 39 eingreift und deren Gewindeschaft 40 eine Gewindebohrung 41 in der Anschlußleiste 36 des ersten Lineals 10 durchsetzt, wobei die Spannschraube 37 zum gegenseitigen Verspannen der beiden Lineale 10 mit einer in dem C-Profil 11 des zweiten Lineals 10 verdrehsicher und verschiebbar geführten Kontermutter 35 zusammenwirkt. Die beiden miteinander gekoppelten Lineale 10 sind über die ganze Länge mittels Befestigungsschrauben 32 an einer Konsole 42 befestigt.

Für den Transport können die Lineale 10 im Versatz zueinander gestückelt und später wieder zusammengeschraubt werden. Die zugehörigen Meßschieber entsprechen dem in Fig. 5 dargestellten Meßschieber 16.

Fig. 5 zeigt eine von der Konsolenbefestigung des Lineals 10 an einer Bearbeitungsmaschine 26 gemäß Fig. 4 abweichende Konsolenbefestigung, bei der das Lineal 10 an einer oder mehreren Stellen mit der Anschlußleiste 36 des Seitenschenkels 14 des C-Profils 11 an einer an einer Bearbeitungsmaschine 26 angebrachten Konsole 42 mittels einer Spannschraube 43 und einer Kontermutter 44 befestigt wird, die in der Innennut 39 der Anschlußleiste 36 verdrehsicher gehalten ist. Die Konsole 42 weist eine Führungskante 45 für das zu bearbeitende Werkstück 18 auf.

Entsprechend Fig. 5 kann das Lineal 10 auch über die ganze Unterseite 46 auf eine Fläche aufgelegt bzw. an einer Konsole befestigt werden.

Das Werkstück 18 kann bei den in den Figuren 3 bis 6 dargestellten Meß- und Ablänganschlägen sehr leicht seitlich entnommen werden.

Das zu bearbeitende Werkstück, z. B. eine Kunststofftreibstange eines Drehkippbeschlages für Fenster, wird nicht nur von der Stange sondern auch von der Rolle abgelängt.

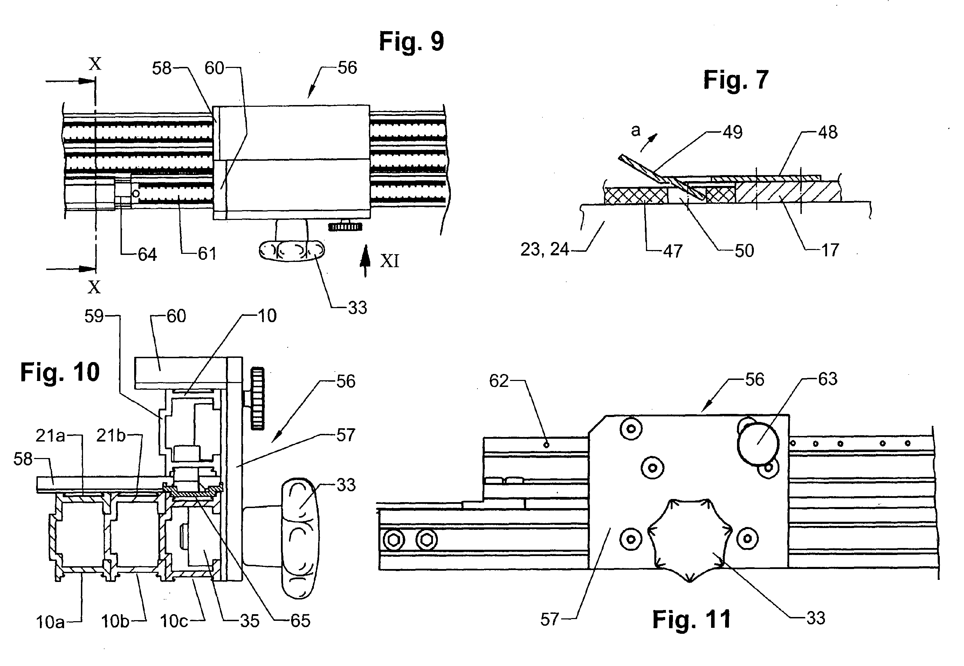

Gemäß Fig. 7 ist zur Bearbeitung derartiger Treibstangen 47 an der Anschlag- und Meßkante 17 des Meßschiebers 16 eine Federlasche 48 befestigt mit einem Mitnehmer 49 zum Einrasten in eine Koppelbohrung 50 der Treibstange 47. Die Federlasche 48 mit dem Mitnehmer 49 gewährleistet einen festen Anschlag der Treibstange 47 an der Anschlag- und Meßkante 17 des Meßschiebers 16 und verhindert eine Aufwölben des Treibstangenprofils. Eine Entkopplung der Treibstange 47 von der Meß- und Anschlagkante 17 wird durch Anheben des Mitnehmers 49 in Pfeilrichtung a erreicht.

Zur Verarbeitung vormontierter Stangen 51 mit vorstehenden Teilen 52 wird gemäß Fig. 8 mit Abstand eine Stützleiste 53 für die Stangen an dem Lineal 10 mittels Befestigungsschrauben 43 und Kontermuttern 44 befestigt. Das Lineal 10 ist gegenüber dem in Fig. 5 dargestellten Meß- und Ablänganschlag um 180° verdreht an einer Konsole 54 mit Schrauben 55 befestigt. Bei diesem Meß- und Ablänganschlag wird ein in die Aufnahmenut 20 des Unterschenkels 13 des Lineals 10 eingelegtes Maßband 21 für erforderliche Messungen verwendet.

Die Figuren 9 bis 11 zeigen einen Meß- und Ablänganschlag 56 für das Serienablängen von Treibstangen z. B. aus Aluminium oder Kunststoff für die Herstellung von Aluminiumfenstern. Der Meß- und Ablänganschlag 56 besteht aus einem Lineal 10a mit einem Maßband 21a mit einer Meßskala im Maßstab 1:1 und einem weiteren Lineal 10b mit einem Maßband 21b mit einer Meßskala im Maßstab 1:2 sowie einem dritten Lineal 10c, das gegenüber den beiden anderen Linealen 10a, 10b um seine Längsachse um 180° gedreht ist. Die einzelnen Lineale 10a, 10b, 10c sind entsprechend der Darstellung in Fig. 6 miteinander gekoppelt. Das Lineal 10c dient zur Führung des Stanzgutes 65. Die Lineale sind fest mit einer nicht dargestellten Stanz- und Ablängvorrichtung verbunden. Ferner besteht der Meß- und Ablänganschlag 56 aus dem Meßschieber 57 mit der Meßzunge 58 als Ablesekante für die Meßskalen der beiden Maßbänder 21a, 21b sowie aus einem beweglichen Abzugsmaßlineal 59, der dazugehörigen Ablesekante 60 und der Klemmschraube 33 mit der Kontermutter 35 für den Meßschieber 57. Das Abzugsmaßlineal 59 besteht aus einem Grundlineal mit einem Maßband 61 mit einem Befestigungspunkt. An dem Grundlineal sind Indexbohrungen 62 angebracht, in die jeweils eine Indexschraube 63 einrastet. Im vorderen Bereich befindet sich der Anschlag 64 für das Stanzgut.

Die Abzugsmaße resultieren aus Zwischenbauteilen und sind bei den jeweiligen Systemanbietern feste Größen, auf welche die Positionen der Indexbohrungen abgestimmt werden können.

Die Arbeitsweise des Meß- und Ablänganschlags ist folgende: Zunächst wird die Indexschraube 63 gelöst. Dann wird die Grobeinstellung des Abzugsmaßlineals 59 mit seiner Skala so weit verschoben, bis das gewünschte Abzugsmaß mit der Ablesekante 60 in Deckung gebracht ist. Durch Eindrehen der Indexschraube 63 wird das Maß fixiert und eine genaue Einstellung erzielt. Anschließend wird die Klemmschraube 33 gelöst und der Meßschieber 57 mittels der Klemmschraube als Handgriff so weit verschoben, bis das erforderliche Maß auf der Skala der festen Lineale sich mit der zugehörigen Meßkante der Meßzunge 58 deckt und festklemmt. Wird z.B. vom halben Flügelmaß eines Fensters ausgegangen, so gilt die Meßskala mit dem Maßstab 1:2, und beim ganzen Flügelmaß die Meßskala mit dem Maßstab 1:1. Danach wird das Stanzgut 65 durch die Stanze gefördert, bis es an dem Anschlag 64 anliegt und die Stanzung ausgelöst wird.

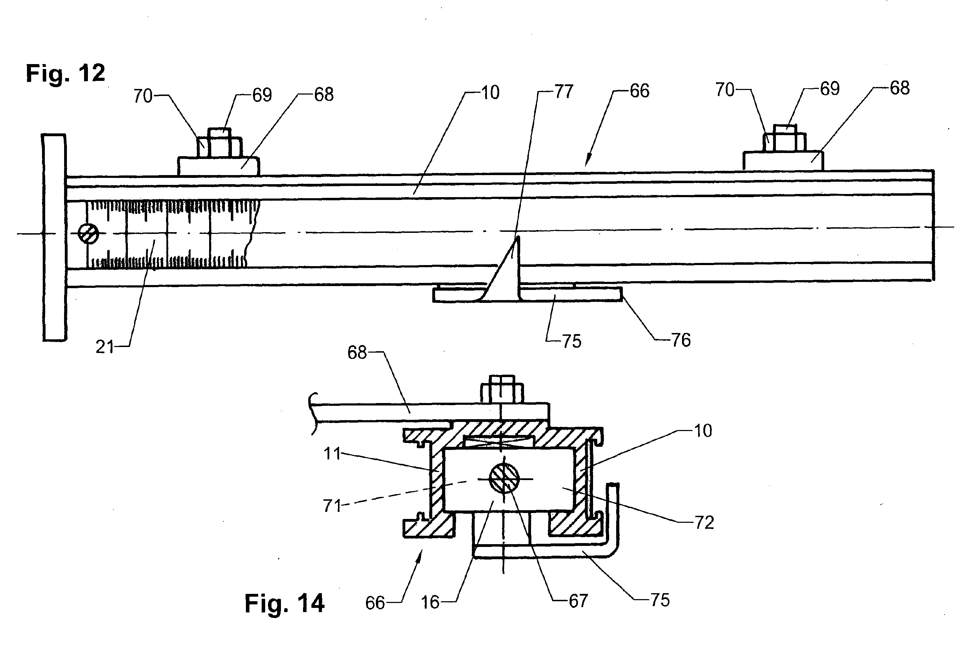

Die Figuren 12 bis 15 zeigen einen Meß- und Ablänganschlag 66 mit einem Meßschieber 16, der mittels einer motorisch angetriebenen Spindel 67 verstellbar ist.

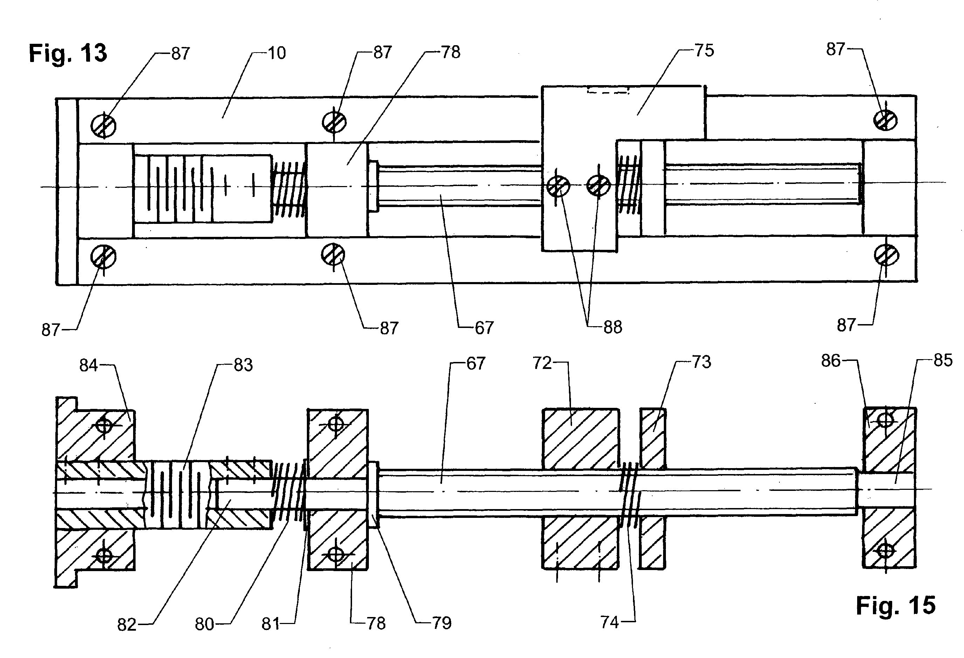

Der Meß- und Ablänganschlag 66 umfaßt ein an Konsolen 68 mit Befestigungsschrauben 69 angebrachtes Lineal 10, den Meßschieber 16 mit Antriebsspindel 67 und ein flexibles Maßband 21 zur optischen Kontrolle des Meßschiebers 16. In dem Innenraum 71 des C-Profils 11 des Lineals 10 ist die Antriebsspindel 67 angeordnet, die einen Meßschieber 16 in Form einer in dem Lineal 10 paßgenau und verdrehsicher angeordneten Spindelmutter 72 translatorisch antreibt, die durch eine weitere in dem Lineal 10 verdrehgesicherte Mutter 73 mit einer Spannfeder 74 spielfrei gehalten wird. An der Spindelmutter 72 ist eine Meßzunge 75 mit einer Kontrollmeßkante 76 und einer Anschlagkante 77 befestigt, die sich quer zum Lineal 10 über dem Maßband 21 erstreckt. An einer Seite des Lineals 10 befindet sich das Festlager 78 der Antriebsspindel 67. Vor dem Festlager 78 ist ein Anlagebund 79 angeordnet. Die Antriebsspindel 67 wird durch eine Feder 80, eine Gleitscheibe 81 sowie eine auf dem Spindelzapfen 82 festgeklemmte Kupplung 83 spielfrei gehalten. Das andere Ende der Kupplung 83 ist in einem Anschlußflansch 84 eines nicht dargestellten Motors spielfrei gelagert. An der gegenüberliegenden Seite des Antriebsspindel 67 befindet sich ein auf einem Zapfen 85 der Spindel angeordnetes Loslager 86. Die Spindeleinheit gemäß Fig. 15 wird in das C-Profil 11 des Lineals 10 entsprechend Fig. 13 eingeschoben und in dem Lineal 10 mit Schrauben 87 befestigt. Die Meßzunge 75 wird dann mit Schrauben 88 an dem Meßschieber 16 angebracht.

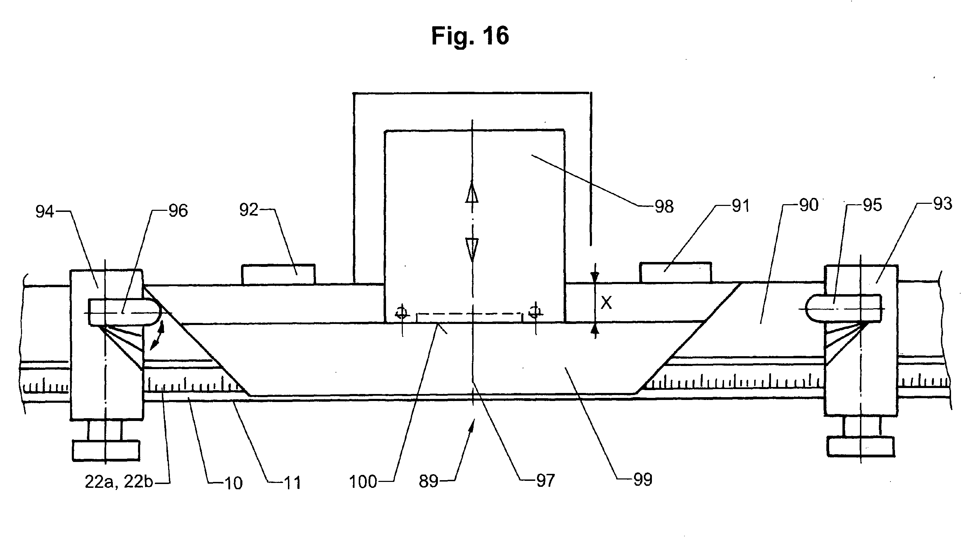

Fig. 16 zeigt ein Meß- und Ablänganschlagsystem 89 zur Einstellung der Position der Grifflochstanzung bei Aluminiumfenstern. Das Meß- und Ablänganschlagsystem umfaßt ein Lineal 10 mit einem C-Profil, zwei Meßbandskalen 22a, 22b, eine Basisplatte 90, Anlagekanten 91, 92 für das Stanzgut, die mit der Basisplatte 90 fest verbunden sind, sowie feststellbare Meßschieber 93, 94 mit Schwenkstützen 95, 96. Die Maßbandskalen 22a, 22b beginnen in der Mitte 97 mit Null und setzten sich nach beiden Seiten steigend fort. Es können Meßskalen im Maßstab 1:1 und kombinierte Meßskalen mit den Maßstäben 1:1 und 1:2 zur Anwendung kommen. Eine Stanzeinrichtung 98 ist mit der Basisplatte 90 derart verbunden, daß sie bei Bedarf auf das unterschiedliche Maß X eines zu bearbeitenden Profils 99 eingestellt werden kann, da die Stanzeinrichtung 89 immer an der Profilanlagekante 100 und das Profil 99 immer an den Anlagenkanten 91, 92 anliegen muß. Es ist vorteilhaft, mit zwei Meßschiebern 93, 94 zu arbeiten, da bei rechter und linker Griffanordnung die Umrechnung erspart wird. Die dem Gehrungswinkel angepaßten Schwenkstützen 95, 96 der Meßschieber 93, 94 ermöglichen eine flachbündige präzise Stanzgutanlage und eine Entlastung der Gehrungsspitze.

## Patentansprüche

1. Meß- und Ablänganschlag zum Einstellen der Bearbeitungs- und Ablängmaße bei Profilen, Stab- und Stangenmaterial, z.B. für die Herstellung von Fenstern und Türen, mit mindestens einem mit einer Meßskala versehenen Lineal, das an einer Bearbeitungsmaschine, insbesondere einer Stanzpresse, befestigt wird, sowie mindestens einem auf dem Lineal verschiebbaren und festklemmbaren Meßschieber mit einem Anschlag für das in die Bearbeitungsmaschine über das Lineal einzuführende oder das aus der Maschine austretende, zu bearbeitende Profil, Stab- und Stangenmaterial, **gekennzeichnet durch** eine Ausbildung des Lineals (10) des Meß- und Ablänganschlags (9) als C-Profil (11) mit einem Oberschenkel (12), einem Unterschenkel (13), einem Seitenschenkel (14) und einer diesem gegenüberliegenden, durchgehenden Seitenöffnung (15), einen in der Seitenöffnung (15) des Lineals (10) seitlich und in Längsrichtung desselben verschiebbar geführten und an dem Lineal (10) festklemmbaren Meßschieber (16) mit einer quer zum Lineal (10) gerichteten und mit Abstand über dessen Oberschenkel (12) angeordneten Anschlag- und Meßkante (17) für das zu bearbeitende Werkstück (18), eine in dem Oberschenkel (12) und/oder dem Unterschenkel (13) des Lineals (10) ausgebildete Aufnahmenut (19, 20) für ein flexibles Maßband (21) mit einer Meßskala (22) sowie über der Aufnahmenut (19) für das Maßband (21) gegenüberliegend angeordnete Längsführungen (23, 24) für das zu bearbeitende Werkstück (18).

2. Meß- und Ablänganschlag nach Anspruch 1, **gekennzeichnet durch** eine Klemmbefestigung des verschiebbaren Lineals (10) an mindestens einer an einer Bearbeitungsmaschine (26) angebrachten Konsole (27) mit einer stufenlosen Einstellbarkeit des Nullpunktes.

3. Meß- und Ablänganschlag nach Anspruch 1 und 2, **gekennzeichnet durch** eine Befestigung des Maßbandes (21) an verschiedenen Stellen (30a - 30c) des Lineals (10) entsprechend der Abmessung des jeweils zu bearbeitenden Werkstücks (18), insbesondere bei der Ablängung von Beschlägen bei der Herstellung von Fenstern zur Einstellung der Meßskala (22) des Maßbandes (21) auf das Flügelfalzmaß, das Flügelaußenmaß oder das Blendrahmenaußenmaß.

4. Meß- und Ablänganschlag nach Anspruch 3, **dadurch gekennzeichnet, daß** das Lineal (10) mehrere Gewindebohrungen (31a - 31c) zum Einschrauben einer Befestigungsschraube (32) des Maßbandes (21) aufweist.

5. Meß- und Ablänganschlag nach einem der Ansprüche 1 bis 4, **gekennzeichnet durch** im Oberschenkel (12) und/oder Unterschenkel (13) des Lineals (10) gegenüberliegend angeordnete Längsführungen (23, 24) für das zu bearbeitende Werkstück (18).

6. Meß- und Ablänganschlag nach einem der Ansprüche 1 bis 4, **gekennzeichnet durch** an einer oder mehreren Konsolen (42) zur Befestigung des Lineals (10) an einer Bearbeitungsmaschine (26) angeordnete Führung (Führungskante 45) bzw. Führungen für das zu bearbeitende Werkstück (18).

7. Meß- und Ablänganschlag nach einem der Ansprüche 1 bis 6, **gekennzeichnet durch** eine Klemmschraube (33), die eine Gewindebohrung (34) in dem Meßschieber (16) von außen durchsetzt und zum Festklemmen des Meßschiebers (16) an dem Lineal (10) mit einer in dem C-Profil (11) desselben verdrehsicher und verschiebbar geführten Kontermutter (35) zusammenwirkt, wobei der Meßschieber (16) mittels der Klemmschraube (33) und der Kontermutter (35) mit einer Hand positionierbar und festklemmbar ist.

8. Meß- und Ablänganschlag nach einem der Ansprüche 1 bis 7, **gekennzeichnet durch** eine an dem Seitenschenkel (14) des Lineals (10) angeordnete Anschlußleiste (36), deren Breite (36a) derjenigen (15a) der gegenüberliegenden Seitenöffnung (15) des Lineals (10) entspricht, zum Koppeln von mehreren Linealen (10) mit Maßbändern (21), die unterschiedliche Meßskalen (22) besitzen, wobei beim Koppeln von zwei Linealen (10) die Anschlußleiste (36) des einen Lineals (10) in die Seitenöffnung (15) des anderen Lineals (10) formschlüssig eingreift.

9. Meß- und Ablänganschlag nach Anspruch 8, **gekennzeichnet durch** eine Spannschraube (37) zur Verbindung eines ersten Lineals (10) mit einem zweiten Lineal (10), wobei die seitliche Anschlußleiste (36) des ersten Lineals (10) in die Seitenöffnung (15) des zweiten Lineals (10) formschlüssig eingreift, der Kopf (38) der Spannschraube (37) in eine von der Anschlußleiste (36) des ersten Lineals (10) gebildete Innennut (39) eingreift und der Gewindeschaft (40) der Spannschraube (37) eine Gewindebohrung (41) in der Anschlußleiste (36) des ersten Lineals (10) durchsetzt und wobei die Spannschraube (37) zum gegenseitigen Verspannen der beiden Lineale (10) mit einer in dem C-Profil (11) des zweiten Lineals (10) verdrehsicher und verschiebbar geführten Kontermutter (35) zusammenwirkt.

10. Meß- und Ablänganschlag nach einem der Ansprüche 1 bis 9, **gekennzeichnet durch** eine Befestigung des Lineals (10) an einer an einer Bearbeitungsmaschine (26) angebrachten Konsole (27), die formschlüssig in das C-Profil (11) des Lineals (10) eingreift.

11. Meß- und Ablänganschlag nach einem der Ansprüche 1 bis 9, **gekennzeichnet durch** eine Befestigung des Lineals (10) mit der Anschlußleiste (36) des Seitenschenkels (14) des C-Profils (11) an einer an einer Bearbeitungsmaschine (26) angebrachten Konsole (42).

12. Meß- und Ablänganschlag nach einem der Ansprüche 1 bis 11, **gekennzeichnet durch** eine an der Anschlag- und Meßkante (17) des Meßschiebers (16) befestigte Federlasche (48) mit einem Mitnehmer (49) zum Einrasten in eine Koppelbohrung (50) des zu bearbeitenden Werkstücks, insbesondere einer Treibstange (47) eines Drehkippbeschlages für Fenster, zur Gewährleistung einer festen Anlage der Treibstange (47) an der Anschlag- und Meßkante (17) des Meßschiebers (16).

13. Meß- und Ablänganschlag nach einem der Ansprüche 1 bis 12, **gekennzeichnet durch** einen an dem Meßschieber (16) seitlich angeordneten Kulissenstein (25) zur Führung des Meßschiebers (16) in der Seitenöffnung (15) des Lineals (10).

14. Meß- und Ablänganschlag (56) nach einem der Ansprüche 1 bis 13, **gekennzeichnet durch** ein verschiebbares Abzugsmaßlineal (59) mit Indexbohrungen (62), in die eine Indexschraube (63) mit ihrer Spitze eingreift.

15. Meß- und Ablänganschlag nach einem der Ansprüche 1 bis 14, **gekennzeichnet durch** einen als Spindelmutter (72) ausgebildeten Meßschieber (16) mit einer Anschlagkante (77) für ein zu bearbeitendes Werkstück und einer Kontrollmeßkante (76) sowie eine spielfrei gelagerte Antriebsspindel (67) zum Verstellen des in einem Lineal (10) verdrehgesicherten, verschiebbaren Meßschiebers (16), wobei das Lineal (10) mit einem Maßband (21) mit einer Meßskala ausgestattet ist.

16. Meß- und Ablänganschlag nach einem der Ansprüche 1 bis 15, **gekennzeichnet durch** feststellbare Meßschieber (93, 94) mit Schwenkstützen (95, 96).
